# EUROPEAN PATENT APPLICATION

(11) **EP 2 679 426 A1**
(43) Date of publication of application: **01.01.2014**
(21) Application number: 12750244.1
(22) Date of filing: 19.01.2012
(51) Int. Cl.: B60K 13/04, E02F 9/00, F01N 13/08

(54) **CONSTRUCTION MACHINE**

(30) Priority: 24.02.2011 JP 2011038634
(71) Applicant: Hitachi Construction Machinery Co., Ltd., Tokyo 112-0004 (JP)
(72) Inventor: KOBAYASHI Takahiro, Tsuchiura-shi Ibaraki 300-0013 (JP); NAKAMURA Tsuyoshi, Tsuchiura-shi Ibaraki 300-0013 (JP); SATO Kensuke, Tsuchiura-shi Ibaraki 300-0013 (JP); AZUMA Hiroyuki, Tsuchiura-shi Ibaraki 300-0013 (JP)
(74) Representative: MERH-IP Matias Erny Reichl Hoffmann
(86) International application number: PCT/JP2012/051073
(87) International publication number: WO 2012/114801

(57) **Abstract**

On an upper revolving structure (3), an engine (8) having an exhaust port (9A) is mounted. In the midway portion of the exhaust pipe (16) connecting the exhaust port (9A) of the engine (8) and an exhaust gas post-treatment device (22), a first bellows pipe (18) and a second bellows pipe (20) are arranged through a connecting pipe (19) having an L-shaped bending portion (19A) . In this case, the first bellows pipe (18) and the second bellows pipe (20) are arranged so as to have a positional relationship in which axis lines thereof (X1-X1, Z1-Z1) cross each other. That is, the first bellows pipe (18) is arranged in a horizontal direction so that its axis line (X1-X1) extends in the left-right direction of the upper revolving structure (3). The second bellows pipe (20) is arranged so that its axis line (Z1-Z1) matches the vertical direction of the upper revolving structure (3).

## Description

### TECHNICAL FIELD

The present invention relates to a construction machine such as a hydraulic excavator provided with an exhaust gas post-treatment device on an exhaust pipe of an engine, for example.

### BACKGROUND ART

In general, a hydraulic excavator which is a typical example of a construction machine is composed of an automotive lower traveling structure, an upper revolving structure rotatably mounted on the lower traveling structure, and a working mechanism liftably provided on the front side of the upper revolving structure. The upper revolving structure has a cab, a fuel tank, an operating oil tank and the like mounted on the front side of a revolving frame and has an engine for driving a hydraulic pump, a heat exchanger and the like mounted on the rear part of the revolving frame.

In the hydraulic excavator in the conventional art, an exhaust pipe is connected to an exhaust port of the engine. On an outlet side of the exhaust pipe, the exhaust gas post-treatment device accommodating a muffler device and the like for reducing an exhaust noise amount is provided. Here, the engine is supported by a vibration isolating mount on the revolving frame and the exhaust gas post-treatment device is directly mounted on the revolving frame and thus, the engine and the exhaust gas post-treatment device are relatively displaced or vibrated due to vibration caused by the engine and vibration caused by a vehicle body (revolving frame). Thus, in the middle of the exhaust pipe, a single bellows pipe having a bellows shape is provided, and such configuration is realized that relative displacement or vibration (hereinafter relative displacement or vibration is referred to simply as vibration) between the engine and the exhaust gas post-treatment device is absorbed by this bellows pipe (Patent Document 1).

### PRIOR ART DOCUMENT

### PATENT DOCUMENT

Patent Document 1: Japanese Patent Laid-Open No. 2009-35111 A

### SUMMARY OF THE INVENTION

According to above described Patent Document 1, the single bellows pipe is arranged with inclination to three axes (X-axis, Y-axis, and Z-axis) on the basis of the exhaust port of the engine. As a result, it is configured that the vibration caused by the engine and the exhaust gas post-treatment device can be absorbed by bending deformation of the bellows pipe.

On the other hand, the bellows pipe can absorb vibration in various directions by bending of the bellows portion. However, the bellows pipe has its deformable amount (contraction amount) in its length direction (axial direction) small, and vibration absorbing capacity in the length direction is not high. Thus, if the single bellows pipe is configured to be arranged with inclination with respect to the three axial directions, the bellows pipe needs to be long to some degree in order to sufficiently absorb the vibration in the three axial directions by the bellows pipe (in order to be able to largely deform the bellows pipe in all the three axial directions). Therefore, in a case where the bellows pipe is made longer, the entire length of the exhaust pipe becomes long, and there are problems that a measure to prevent sympathetic vibration is needed or limitation on freedom in arrangement leads to limitation on the vehicle body on which the exhaust pipe can be mounted and the like.

In view of the above described conventional art problems, it is an object of the present invention to provide a construction machine which can improve vibration absorbing performances of the exhaust pipe and moreover, freedom in arrangement of the exhaust pipe can be ensured.

(1) A construction machine according to the present invention comprises an automotive vehicle body; an engine mounted on the vehicle body and having an exhaust port; an exhaust pipe connected to the exhaust port of the engine; and an exhaust gas post-treatment device provided on the outlet side of the exhaust pipe.

In order to solve the above described problems, the characteristic of the construction adopted in the present invention is that the exhaust pipe has a first bellows pipe located on the engine side and a second bellows pipe located on the exhaust gas post-treatment device side; and the first bellows pipe and the second bellows pipe are configured to be connected in series with a positional relationship in which axis lines thereof cross each other.

With this arrangement, bending deformation directions of the first bellows pipe and the second bellows pipe can be matched with all the three axial directions of the vehicle body (front-rear direction, left-right direction, and upper-lower direction). Thus, vibration of the engine and the exhaust gas post-treatment device whose vibration modes are different from each other can be stably absorbed by means of bending deformation of at least either (one of or the both) of the first bellows pipe and the second bellows pipe. Thereby, the vibration absorbing performances of the exhaust pipe can be improved, and reliability of the construction machine can be improved.

Moreover, since the directions of bending deformation of the first bellows pipe and the second bellows pipe can be matched with the three axial directions of the vehicle body, the vibration can be stably absorbed without making the length of the bellows pipe longer as in the conventional art, and elongation of the length of the exhaust pipe can be suppressed. Therefore, freedom in arrangement of the exhaust pipe can be ensured, and limitation on the vehicle body on which the exhaust pipe can be mounted can be reduced.

(2) According to the present invention, the bellows pipe which is one of the first bellows pipe and the second bellows pipe is configured to be arranged in a horizontal direction, while the other bellows pipe of the first bellows pipe and the second bellows pipe is configured to be arranged in a vertical direction.

With this arrangement, the direction of bending deformation of one of the bellows pipes arranged in the horizontal direction can be matched with the upper-lower direction and the left-right direction of the vehicle body or with the upper-lower direction and the front-rear direction. On the other hand, the direction of bending deformation of the other bellows pipe arranged in the vertical direction can be matched with the front-rear direction and the left-right direction of the vehicle body. As a result, the bending deformation direction of each of the bellows pipes can be matched with all the three axial directions of the vehicle body, and vibration can be stably absorbed.

Moreover, since in the other bellows pipe, its length direction (axial direction) in which deformation is difficult is matched with the vertical direction in which its own weight acts, deformation of itself caused by its own weight can be suppressed. At the same time, in the one bellows pipe arranged in the horizontal direction, too, the bending deformation amount by its own weight can be kept small by the other bellows pipe. As a result, the vibration absorbing performances can be improved while deformation by its own weight is suppressed.

(3) According to the present invention, a connecting pipe having an L-shaped bending portion is provided between the first bellows pipe and the second bellows pipe. With this arrangement, the one bellows pipe arranged in the horizontal direction and the other bellows pipe arranged in the vertical direction can be connected by the connecting pipe.

(4) According to the present invention, a length of the other bellows pipe arranged in the vertical direction is set equal to or more than a length of the one bellows pipe arranged in the horizontal direction. As a result, by setting the length of the other bellows pipe subjected to bending deformation in the front-rear direction and the left-right direction longer, the vibration absorbing performances in the front-rear direction and the left-right direction of the vehicle body in which the vibration amount (displacement amount) is larger can be improved.

(5) According to the present invention, the first bellows pipe is arranged in the horizontal direction and the second bellows pipe is arranged in the horizontal direction with a positional relationship of crossing the first bellows pipe in configuration. With this arrangement, the direction of bending deformation of the one bellows pipe can be matched with the upper-lower direction and the left-right direction of the vehicle body, while the direction of bending deformation of the other bellows pipe can be matched with the upper-lower direction and the front-rear direction of the vehicle body. As a result, bending deformation direction of each of the bellows pipe can be matched with all the three axial directions of the vehicle body, and vibration can be stably absorbed.

(6) According to the present invention, a connecting pipe having two L-shaped bending portions having different height positions in the upper-lower direction is provided between the first bellows pipe and the second bellows pipe in configuration. With this arrangement, the first bellows pipe and the second bellows pipe arranged in the horizontal direction at different height positions, respectively, can be connected by the connecting pipe.

(7) According to the present invention, a connecting pipe arranged in the horizontal direction and having an L-shaped bending portion is provided between the first bellows pipe and the second bellows pipe in configuration. With this arrangement, the first bellows pipe and the second bellows pipe arranged in the horizontal direction at the same height, respectively, can be connected by the connecting pipe.

(8) The construction machine according to the present invention comprises an automotive vehicle body; an engine mounted on the vehicle body and having an exhaust port; a first exhaust pipe connected to the exhaust port of the engine; a first exhaust gas post-treatment device provided on the outlet side of the first exhaust pipe; a second exhaust pipe connected to an exhaust port of the first exhaust gas post-treatment device; and a second exhaust gas post-treatment device provided on the outlet side of the second exhaust pipe.

In order to solve the above described problems, the characteristic of the construction adopted in the present invention is that at least one exhaust pipe in the first exhaust pipe and the second exhaust pipe has a first bellows pipe located on the upstream side with respect to a flow direction of an exhaust gas and a second bellows pipe located on the downstream side of the first bellows pipe; and the first bellows pipe and the second bellows pipe are configured to be connected in series with a positional relationship in which axis lines thereof cross each other.

With this arrangement, the bending deformation directions of the first exhaust pipe and the second exhaust pipe can be matched with all the three axial directions of the vehicle body, for example. Thus, the vibration of the engine and the first exhaust gas post-treatment device whose vibration modes are different from each other and/or the vibration of the first exhaust gas post-treatment device and the second exhaust gas post-treatment device whose vibration modes are different from each other can be stably absorbed by means of bending deformation of at least either of the first bellows pipe and the second bellows pipe. As a result, the vibration absorbing performances of the exhaust pipe can be improved, and reliability of the construction machine can be improved.

Moreover, since the bending deformation directions of the first bellows pipe and the second bellows pipe can be matched with the three axial directions of the vehicle body, the vibration can be stably absorbed without making the length of the bellows pipe longer as in the conventional art, and elongation of the length of the exhaust pipe can be suppressed. Therefore, freedom in arrangement of the exhaust pipe can be ensured.

### BRIEF DESCRIPTION OF THE DRAWINGS

Fig. 1 is a front view illustrating a hydraulic excavator applied to a first embodiment of the present invention.
Fig. 2 is a plan view illustrating an upper revolving structure in a state in which a cab, a housing cover and the like are omitted.
Fig. 3 is a sectional view when seen from an arrow III-III direction in Fig. 1.
Fig. 4 is a plan view illustrating an engine, an exhaust pipe, an exhaust gas post-treatment device and the like when seen from an arrow IV-IV direction in Fig. 3.
Fig. 5 is a perspective view illustrating a partition member, the exhaust gas post-treatment device, the exhaust pipe and the like.
Fig. 6 is an enlarged sectional view of a (VI) part in Fig. 3 illustrating a state in which the exhaust pipe is mounted between the engine and the exhaust gas post-treatment device in an exploded manner.
Fig. 7 is a sectional view illustrating the upper revolving structure according to a second embodiment of the present invention when seen from a direction similar to Fig. 3.
Fig. 8 is a plan view illustrating the engine, the exhaust pipe, the exhaust gas post-treatment device and the like when seen from an arrow VIII-VIII direction in Fig. 7.
Fig. 9 is a perspective view illustrating a support member, the exhaust gas post-treatment device, the exhaust pipe and the like.
Fig. 10 is a sectional view illustrating the upper revolving structure according to a third embodiment of the present invention similar to Fig. 3.
Fig. 11 is a perspective view illustrating the support member, the exhaust gas post-treatment device, the exhaust pipe and the like.
Fig. 12 is a plan view illustrating the upper revolving structure according to a fourth embodiment of the present invention when seen from a direction similar to Fig. 2.
Fig. 13 is an enlarged plan view of a (XIII) part in Fig. 12 illustrating the engine, the exhaust pipe, the exhaust gas post-treatment device and the like in an enlarged manner.
Fig. 14 is a perspective view illustrating the partition member, a counterweight, a first exhaust gas post-treatment device, a second exhaust gas post-treatment device and the like.
Fig. 15 is a perspective view illustrating the support member, the exhaust gas post-treatment device, the exhaust pipe and the like according to a first modification of the present invention at a position similar to Fig. 11.
Fig. 16 is a perspective view illustrating the counterweight, a support deck, the second exhaust gas post-treatment device and the like according to a second modification of the present invention.

### MODE FOR CARRYING OUT THE INVENTION

Hereafter, a hydraulic excavator provided with a crawler-type lower traveling structure as an example of a construction machine according to an embodiment of the present invention will be described below in detail with reference to the accompanying drawings.

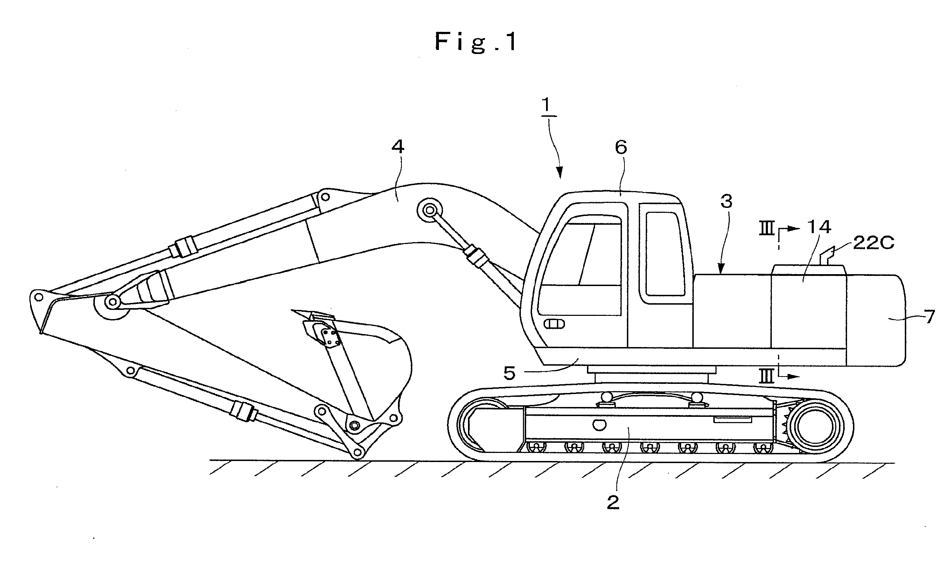

Figs. 1 to 6 illustrate a first embodiment of a hydraulic excavator according to the present invention.

In the drawings, designated at 1 is a hydraulic excavator as a construction machine used for an excavating work of earth and sand or the like. This hydraulic excavator 1 is composed of an automotive crawler-type lower traveling structure 2, an upper revolving structure 3 rotatably mounted on the lower traveling structure 2 and constituting a vehicle body together with the lower traveling structure 2, and a working mechanism 4 liftably provided on the front side of the upper revolving structure 3.

Here, the upper revolving structure 3 constituting the hydraulic excavator 1 will be described in detail. Indicated at 5 is a revolving frame of the upper revolving structure 3, and the revolving frame 5 is constituted as a support structural body. This revolving frame 5 is composed of a bottom plate 5A made of a thick steel plate or the like extending in the front-rear direction, a left vertical plate 5B and a right vertical plate 5C installed upright on the bottom plate 5A and extending in the front-rear direction at a predetermined interval in the left-right direction, a left side frame 5D and a right side frame 5E arranged at an interval in the left-right direction of each of the vertical plates 5B and 5C and extending in the front-rear direction, and a plurality of extension beams 5F extending in the left-right direction from the bottom plate 5A and, each of the vertical plates 5B and 5C and supporting the left-right side frames 5D and 5E at the distal end portions thereof.

On the front side of the revolving frame 5, the working mechanism 4 is located between the left-right vertical plates 5B and 5C and liftably mounted, and a cab 6 is mounted on the right side of the working mechanism 4. On the other hand, a counterweight 7, an engine 8 and the like which will be described later are provided on the rear side of the revolving frame 5.

The cab 6 is mounted on the left front side of the revolving frame 5 (left side of a foot portion of the working mechanism 4), and inside of this cab 6, a driver' s seat on which an onboard operator is seated, an operating lever for running, an operating lever for working and the like (none of them is shown) are disposed.

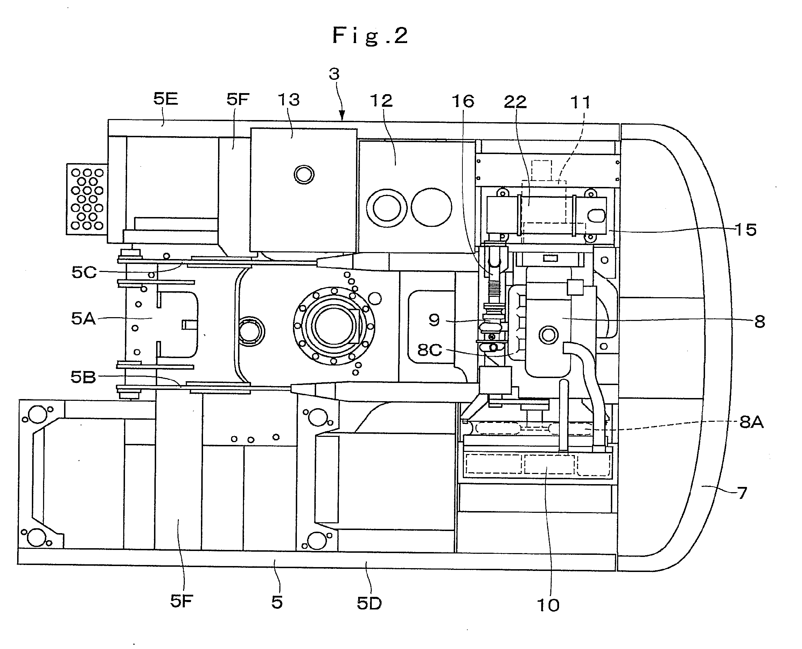

The counterweight 7 is mounted on a rear end portion of the revolving frame 5, and the counterweight 7 holds weight balance with the working mechanism 4. As illustrated in Fig. 2, the counterweight 7 has its front surface formed flat and its rear surface side protruded so as to be curved.

Indicated at 8 is an engine provided on the rear side of the revolving frame 5. As illustrated in Fig. 2, the engine 8 is mounted in a transversely mounted state extending in the left-right direction. On the left side of the engine 8, a cooling fan 8A for supplying cooling air to a heat exchanger 10 which will be described later is provided.

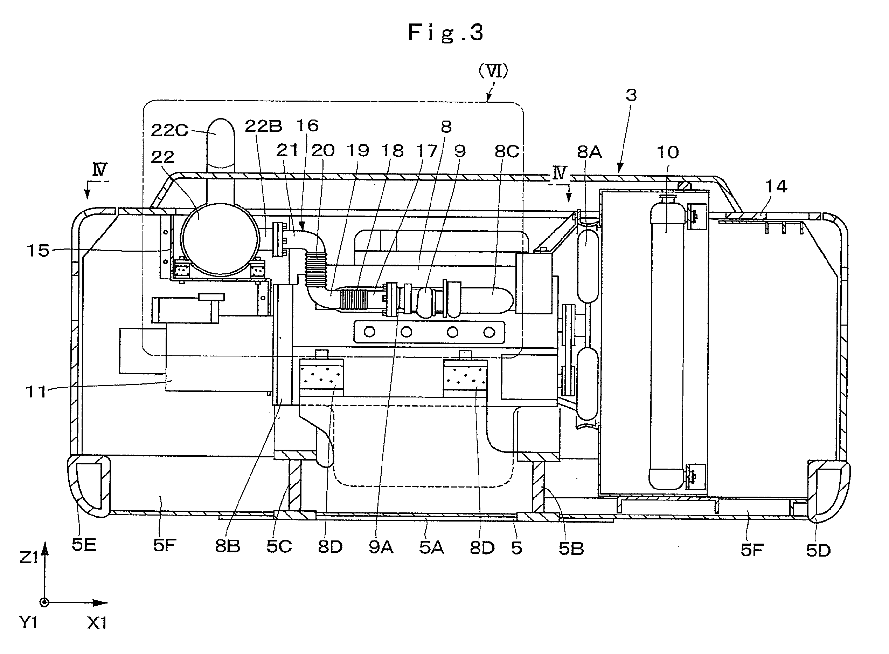

On the other hand, on the right side of the engine 8, a pump mounting portion 8B (See Fig. 3) for mounting a hydraulic pump 11 which will be described later is provided. On the upper part on the front side of the engine 8, a super charger 9 which will be described later is provided by connecting to an exhaust manifold 8C. The engine 8 is supported by the revolving frame 5 in a vibration isolating state through four vibration isolating mounts 8D (only two of them are shown in Fig. 3), for example.

The super charger 9 constitutes a part of the engine 8, and the super charger 9 is located on the front side of the engine 8 and is connected to the exhaust manifold 8C. At the distal end of the super charger 9, an exhaust port 9A is opened. The exhaust port 9A of the super charger 9 is to exhaust an exhaust gas from the engine 8, and to the exhaust port 9A of this super charger 9, an exhaust pipe 16 which will be described later is connected.

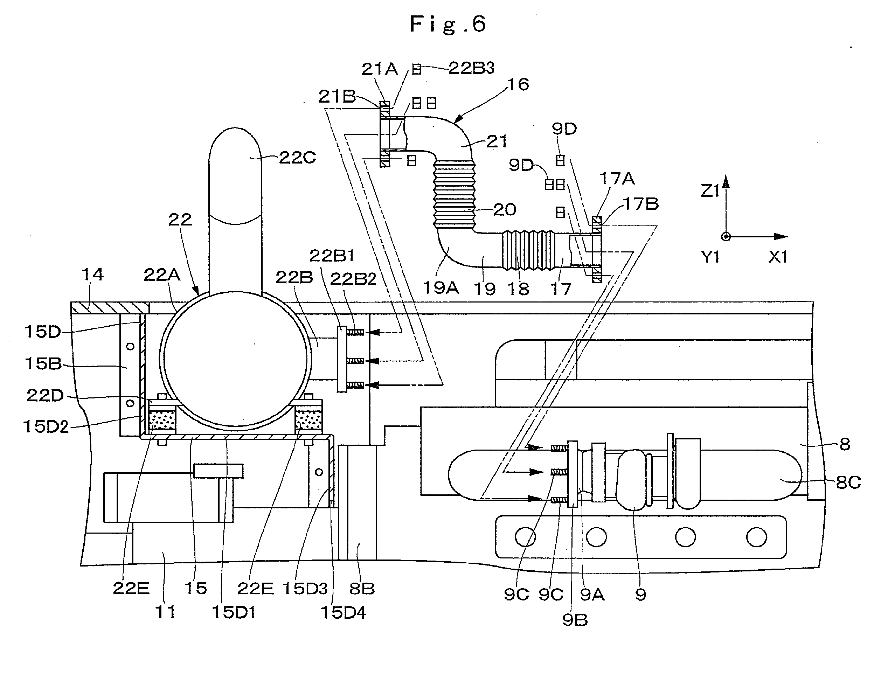

As illustrated in Fig. 6, on the exhaust port 9A of the super charger 9, a mounting flange portion 9B protruding toward the outer diameter side is provided over the entire periphery. On the mounting flange portion 9B, a plurality of (four, for example) stud bolts 9C are mounted spaced apart from each other in the peripheral direction. Each of these stud bolts 9C is screwed with nuts 9D, respectively, and by using each of these stud bolts 9C and the nut 9D, the exhaust pipe 16 can be fixed to the exhaust port 9A of the super charger 9.

The heat exchanger 10 is disposed on the left side of the engine 8, and the heat exchanger 10 is provided opposite to the cooling fan 8A of the engine 8. This heat exchanger 10 is composed of a radiator for cooling engine cooling water, an oil cooler for cooling operating oil, an intercooler for cooling air sucked by the engine 8 and the like, for example.

The hydraulic pump 11 is mounted on the pump mounting portion 8B of the engine 8, and the hydraulic pump 11 is to discharge the operating oil supplied from an operating oil tank 12 which will be described later as a pressure oil toward a control valve (not shown) by being driven by the engine 8.

The operating oil tank 12 is located on the front side of the hydraulic pump 11 and provided on the right side of the revolving frame 5, and the operating oil tank 12 stores the operating oil for driving the lower traveling structure 2, the working mechanism 4 and the like. On the other hand, a fuel tank 13 is provided on the front side of the operating oil tank 12.

A housing cover 14 is to close the engine 8, the heat exchanger 10, an exhaust gas post-treatment device 22 which will be described later and the like from above, and the housing cover 14 is located between the cab 6 and the counterweight 7 and provided on the revolving frame 5. The housing cover 14 is mounted on the revolving frame 5 by using a partition member 15 which will be described later and a support beam (not shown).

The partition member 15 is located on the right side of the engine 8 and provided on the revolving frame 5, and the partition member 15 supports the housing cover 14 and defines a pump chamber surrounding the hydraulic pump 11. Here, the partition member 15 thermally shuts off the hydraulic pump 11 from the engine 8 and is called a firewall.

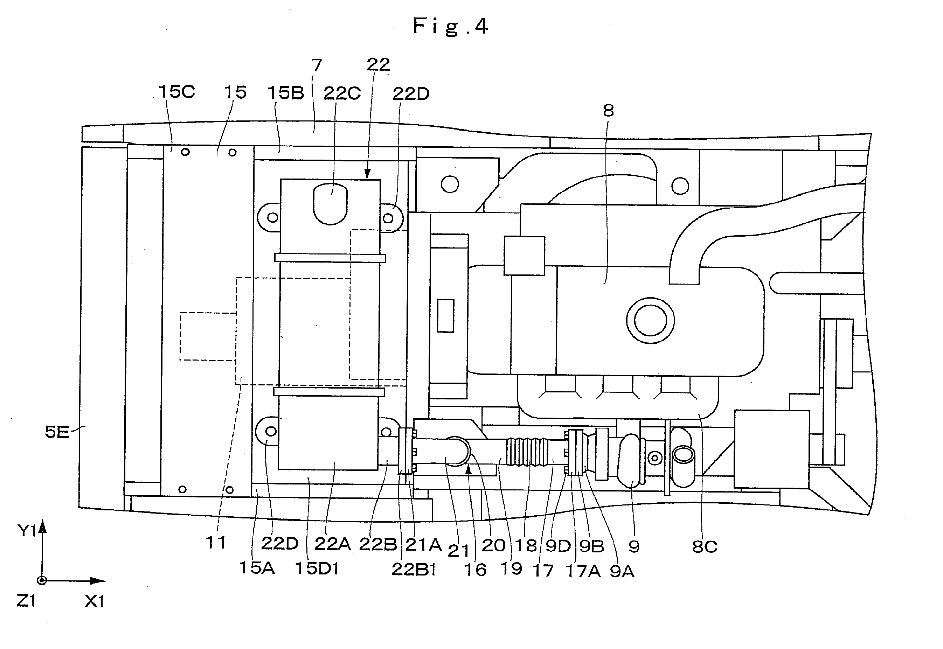

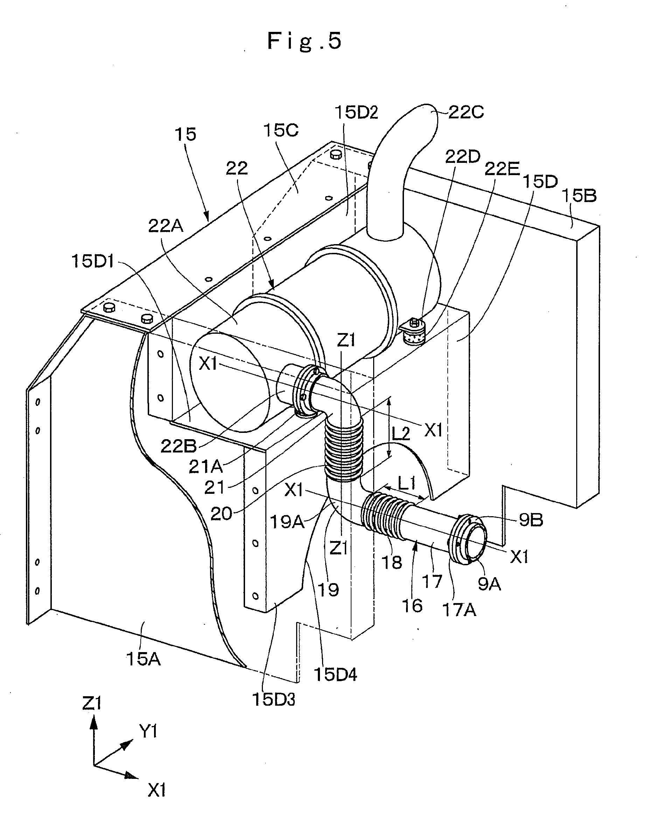

As illustrated in Figs. 4 and 5, the partition member 15 is composed of a front vertical plate 15A installed upright on the front side of the hydraulic pump 11, a rear vertical plate 15B installed upright opposite to that in a state sandwiching the hydraulic pump 11 in the front-rear direction, a connecting plate 15C connecting the right side upper part of the front vertical plate 15A and the right side upper part of the rear vertical plate 15B, and a shielding cover 15D which will be described later. The front vertical plate 15A is arranged so as to oppose the rear surface of the operating oil tank 12, for example, and a lower part thereof is mounted on the revolving frame 5. On the other hand, the rear vertical plate 15B is arranged so as to oppose the front surface of the counterweight 7 and a lower part thereof is mounted on the revolving frame 5.

The shielding cover 15D is provided between the front vertical plate 15A and the rear vertical plate 15B, and the shielding cover 15D is arranged so as to shield between the engine 8 and the hydraulic pump 11. Here, the shielding cover 15D is formed as a stepped plate by applying bending work to a single steel plate cut out in a predetermined shape, for example. That is, the shielding cover 15D is formed of a treatment device mounting portion 15D1 supporting the exhaust gas post-treatment device 22 which will be described later, a riser plate 15D2 extending upward from one end (end portion on the side opposite to the engine 8) of the treatment device mounting portion 15D1, and a downward plate 15D3 extending downward from the other end (end portion on the engine 8 side) of the treatment device mounting portion 15D1. In the downward plate 15D3, a notched portion 15D4 into which the hydraulic pump 11 is inserted is formed, and it is configured that the hydraulic pump 11 is arranged in this notched portion 15D4.

Subsequently, the exhaust pipe 16, the exhaust gas post-treatment device 22 and the like for exhausting the exhaust gas exhausted by the engine 8 to the outside of the upper revolving structure 3 will be described.

Designated at 16 is the exhaust pipe connected to the exhaust port 9A of the super charger 9 constituting the engine 8. This exhaust pipe 16 is for a flow of a high-temperature exhaust gas therein and is formed as a metal pipe. The exhaust pipe 16 is composed of an upstream side pipe 17, a first bellows pipe 18, a connecting pipe 19, a second bellows pipe 20, and a downstream side pipe 21 which will be described later.

Indicated at 17 is the upstream side pipe connected to the exhaust port 9A of the super charger 9, and the upstream side pipe 17 is arranged so as to extend in the horizontal direction from the exhaust port 9A of the super charger 9 toward the right side in the left-right direction of the vehicle body. As illustrated in Fig. 6, on the upstream end side of the upstream side pipe 17, a mounting flange portion 17A is provided. In the mounting flange portion 17A, a plurality of (four, for example) bolt through holes 17B corresponding to the stud bolts 9C mounted on the mounting flange portion 9B of the super charger 9 are provided. The upstream side pipe 17 is to be fixed to the exhaust port 9A of the super charger 9 by inserting the stud bolt 9C into each of the bolt through holes 17B and screwing it with a nut 9D.

Indicated at 18 is the first bellows pipe located on the engine 8 side, and the first bellows pipe 18 is provided by connecting to an outlet port of the upstream side pipe 17. This first bellows pipe 18 absorbs vibration between the super charger 9 of the engine 8 and the exhaust gas post-treatment device 22 which will be described later together with the second bellows pipe 20 which will be described later.

The first bellows pipe 18 is formed as a metal cylindrical body having a bellows shape and is arranged so as to extend in the horizontal direction from the downstream end of the upstream side pipe 17 toward the right side in the left-right direction of the vehicle body. That is, as illustrated in Fig. 5, the first bellows pipe 18 is arranged horizontally so that its axis line X1-X1 extends in the left-right direction of the vehicle body. The both ends of the first bellows pipe 18 are integrally fixed to the upstream side pipe 17 and the connecting pipe 19 which will be described later by using welding means, for example. As a result, the first bellows pipe 18 is capable of bending deformation in an upper-lower direction (Z1-Z1) and a front-rear direction (Y1-Y1) between the upstream side pipe 17 and the connecting pipe 19. Therefore, the first bellows pipe 18 can absorb vibration in the upper-lower direction and the front-rear direction between the upstream side pipe 17 and the connecting pipe 19.

The connecting pipe 19 is provided between the first bellows pipe 18 and the second bellows pipe 20 which will be described later, and the connecting pipe 19 connects the first bellows pipe 18 and the second bellows pipe 20 to each other at different height positions. Here, the connecting pipe 19 is formed as a connecting pipe having a bending portion 19A bent at 90 degrees in a substantially L-shape and connects the first bellows pipe 18 and the second bellows pipe 20 in series with a positional relationship in which the axis line X1-X1 in the horizontal direction and the axis line Z1-Z1 in the vertical direction thereof cross each other and moreover, so that the second bellows pipe 20 comes on the upper side.

That is, as illustrated in Fig. 5, the connecting pipe 19 connects the first bellows pipe 18 and the second bellows pipe 20 in series so that the axis line X1-X1 of the first bellows pipe 18 and the axis line Z1-Z1 of the second bellows pipe 20 cross each other or more specifically, they cross each other at 90 degrees (at a right angle) between the horizontal direction and the vertical direction. The both ends of the connecting pipe 19 are integrally fixed to the first bellows pipe 18 and the second bellows pipe 20 by using welding means, for example.

Indicated at 20 is the second bellows pipe located on the exhaust gas post-treatment device 22 side which will be described later, and the second bellows pipe 20 is provided by connecting to the outlet port of the connecting pipe 19. This second bellows pipe 20 absorbs vibration between the super charger 9 of the engine 8 and the exhaust gas post-treatment device 22 together with the first bellows pipe 18.

The second bellows pipe 20 is formed as a metal cylindrical body having a bellows shape and is arranged so as to extend toward the upper side of the vehicle body from the downstream end of the connecting pipe 19. That is, as illustrated in Fig. 5, the second bellows pipe 20 is arranged so that the axis line Z1-Z1 thereof matches the vertical direction of the vehicle body. The both ends of the second bellows pipe 20 are fixed to the connecting pipe 19 and the downstream side pipe 21 which will be described later by using welding means, for example. As a result, the second bellows pipe 20 is capable of bending deformation in the front-rear direction (Y1-Y1) and the left-right direction (X1-X1) between the connecting pipe 19 and the downstream side pipe 21. Therefore, the second bellows pipe 20 can absorb vibration in the front-rear direction and the left-right direction between the connecting pipe 19 and the downstream side pipe 21.

Moreover, a length L2 of the second bellows pipe 20 is set equal to or more than a length L1 of the first bellows pipe 18 arranged horizontally (L2 ≥ L1). Preferably, the length L2 of the second bellows pipe 20 is set longer than the length L1 of the first bellows pipe 18 (L2 > L1). As a result, the vibration absorbing performances in the front-rear direction and the left-right direction of the vehicle body where a vibration amount (displacement amount) becomes large can be sufficiently ensured.

Indicated at 21 is a downstream side pipe provided between the second bellows pipe 20 and an inlet side connecting portion 22B of the exhaust gas post-treatment device 22 which will be described later, and the downstream side pipe 21 is located on the upper side of the second bellows pipe 20 and connected to the inlet side connecting portion 22B. As illustrated in Fig. 6, the downstream side pipe 21 is formed as a connecting pipe which can be bent at 90 degrees in a substantially L-shape in the horizontal direction and the vertical direction, and a mounting flange portion 21A is provided on the downstream end side. In the mounting flange portion 21A, a bolt through hole 21B corresponding to a stud bolt 22B2 mounted on a mounting flange portion 22B1 of the inlet side connecting portion 22B is provided. Here, the downstream side pipe 21 is fixed to the inlet side connecting portion 22B by inserting the stud bolt 22B2 into each of the bolt through holes 21B and screwing it with a nut 22B3.

Indicated at 22 is the exhaust gas post-treatment device provided on the outlet side of the exhaust pipe 16, and the exhaust gas post-treatment device 22 is to treat the exhaust gas exhausted from the engine 8. This exhaust gas post-treatment device 22 is mounted on the treatment device mounting portion 15D1 of the partition member 15 through a vibration isolating member 22E.

The exhaust gas post-treatment device 22 is composed of a cylindrical case 22A formed as a cylindrical vessel extending in the front-rear direction, the inlet side connecting portion 22B extending to the engine 8 side from the front side (upstream side) of the cylindrical case 22A, a tail pipe 22C which becomes an exhaust port extending upward from the rear side (downstream side) of the cylindrical case 22A, a treatment device main body (not shown) accommodated in the cylindrical case 22A, and four mounting brackets 22D, for example, provided on the lower side of the cylindrical case 22A.

Here, the treatment device main body accommodated in the cylindrical case 22A will be described. As this treatment device main body, a muffler device (exhaust muffler) for reducing a noise of the exhaust gas, an oxidation catalyst device incorporating an oxidation catalyst for oxidizing and removing nitrogen monoxide (NO), carbon monoxide (CO), hydrocarbon (HC) and the like contained in the exhaust gas, a PM trapping device incorporating a filter for trapping and removing particulate matters (PM) contained in the exhaust gas, a NOx purifying device for purifying nitrogen oxides (NOx) contained in the exhaust gas and the like are known. These treatment device main bodies may be used singularly or in combination.

The exhaust gas post-treatment device 22 can be mounted on the treatment device mounting portion 15D1 in the vibration isolating state by mounting the vibration isolating member 22E for the treatment device on each of the mounting brackets 22D and by mounting this vibration isolating member 22E on the treatment device mounting portion 15D1 of the partition member 15.

As illustrated in Fig. 6, on the inlet side connecting portion 22B of the exhaust gas post-treatment device 22, the mounting flange portion 22B1 protruding toward the outer diameter side is provided over the entire periphery. On the mounting flange portion 22B1, plural pieces of the stud bolts 22B2 are mounted spaced apart from each other in the peripheral direction. It is configured such that the downstream side pipe 21 of the exhaust pipe 16 can be fixed to the inlet side connecting portion 22B of the exhaust gas post-treatment device 22 by screwing the nut 22B3 with each of the stud bolts 22B2.

The hydraulic excavator 1 according to the first embodiment has the configuration as described above, and its operation will be described.

An operator gets on the cab 6 of the upper revolving structure 3 and starts the engine 8 so as to drive the hydraulic pump 11. The pressure oil from the hydraulic pump 11 is supplied to various actuators through the control valve. When the operator onboard the cab 6 operates the operating lever (not shown) for running, the operator can advance or retreat the lower traveling structure 2. On the other hand, by operating the operating lever (not shown) for working, the operator can perform an excavating work of earth and sand or the like by moving the working mechanism 4 upward/downward.

The exhaust gas exhausted from the engine 8 while the engine 8 is operating is exhausted into the air through the exhaust pipe 16 and the exhaust gas post-treatment device 22. At this time, for example, carbon monoxide (CO) and the like are removed from the exhaust gas by the oxidation catalyst device of the exhaust gas post-treatment device 22, particulate matters are removed by the PM trapping device, nitrogen oxides are decomposed into nitrogen and water and purified by the NOx purifying device, and moreover, the exhaust noise is reduced by the muffler device and then, exhausted into the air.

During running or working of the hydraulic excavator 1, the engine 8 supported through a vibration isolating mount 8D vibrates on the revolving frame 5. The exhaust gas post-treatment device 22 mounted on the revolving frame 5 through the partition member 15 and the vibration isolating member 22E vibrates in a vibration mode different from that of the engine 8. In this case, the vibration of the engine 8 and the exhaust gas post-treatment device 22 can be absorbed by bending deformation of the first bellows pipe 18 and the second bellows pipe 20 arranged in the midway portion of the exhaust pipe 16 with a positional relationship in which the axis lines X1-X1 and Z1-Z1 thereof cross each other.

That is, in the vibration of the engine 8 and the exhaust gas post-treatment device 22, the vibration in the front-rear direction of the vehicle body (displacement in the axis line Y1-Y1 direction) can be absorbed by bending deformation of the first bellows pipe 18 and the second bellows pipe 20 in the front-rear direction. In the vibration of the engine 8 and the exhaust gas post-treatment device 22, the vibration in the left-right direction of the vehicle body (displacement in the axis line X1-X1 direction) can be absorbed by bending deformation of the second bellows pipe 20 in the left-right direction. In the vibration of the engine 8 and the exhaust gas post-treatment device 22, the vibration in the upper-lower direction of the vehicle body (displacement in the axis line Z1-Z1 direction) can be absorbed by bending deformation of the first bellows pipe 18 in the upper-lower direction.

Therefore, the composite vibration in the front-rear direction, the left-right direction, and the upper-lower direction can be absorbed by bending deformation of the first bellows pipe 18 and the second bellows pipe 20. As a result, the vibration between the engine 8 and the exhaust gas post-treatment device 22 can be stably absorbed by the bending deformation of the first bellows pipe 18 and the second bellows pipe 20.

According to the first embodiment, the first bellows pipe 18 and the second bellows pipe 20 arranged through the L-shaped connecting pipe 19 in the midway portion of the exhaust pipe 16 are configured to be connected in series with a positional relationship in which the axis lines X1-X1 and Z1-Z1 thereof cross each other (at a right angle on an elevation view). Thus, the directions of the bending deformation of each of the bellows pipes 18 and 20 can be matched with all the three axial directions of the vehicle body (front-rear direction, left-right direction, and upper-lower direction).

That is, by arranging the first bellows pipe 18 in the horizontal direction so that the axis line X1-X1 thereof extends in the left-right direction of the vehicle body, the direction of bending deformation of the first bellows pipe 18 can be matched with the upper-lower direction and the front-rear direction of the vehicle body. Moreover, by arranging the second bellows pipe 20 so that the axis line Z1-Z1 thereof matches the vertical direction, the direction of bending deformation of the second bellows pipe 20 can be matched with the front-rear direction and the left-right direction of the vehicle body.

Thus, relative vibration of the engine 8 and the exhaust gas post-treatment device 22 whose vibration modes are different from each other can be stably absorbed by means of bending deformation of at least either (one of or the both) of the first bellows pipe 18 and the second bellows pipe 20. Thereby, the vibration absorbing performances of the exhaust pipe 16 can be improved, and reliability of the hydraulic excavator 1 can be improved.

Moreover, the directions of bending deformation of the first bellows pipe 18 and the second bellows pipe 20 can be matched with the three axial directions of the vehicle body. Thus, vibration can be stably absorbed without making the length of the bellows pipe longer as in the conventional art or in other words, even if the lengths of each of the bellows pipes 18 and 20 are set shorter, and elongation of the length of the exhaust pipe 16 can be suppressed. Therefore, freedom in arrangement of the exhaust pipe 16 can be ensured, and limitation on the vehicle body on which the exhaust pipe can be mounted can be reduced.

In this case, since the first bellows pipe 18 and the second bellows pipe 20 are configured to be connected with a positional relationship in which the axis lines X1-X1 and Z1-Z1 thereof cross each other, the exhaust pipe 16 can be mounted more easily between the super charger 9 of the engine 8 and the exhaust gas post-treatment device 22. That is, as illustrated in Fig. 6, when the exhaust pipe 16 is mounted between the mounting flange portion 9B of the super charger 9 and the mounting flange portion 22B1 of the exhaust gas post-treatment device 22, the second bellows pipe 20 can be subjected to bending deformation in the left-right direction (axis line X1-X1 direction) of the vehicle body. By bending deformation the second bellows pipe 20 as above, an interval in the left-right direction of the mounting flange portions 17A and 21A on the both end portions of the exhaust pipe 16 can be made smaller. Therefore, the exhaust pipe 16 can be easily assembled between the super charger 9 and the exhaust gas post-treatment device 22 while avoiding interference between the mounting flange portions 17A and 21A on the both end portions of the exhaust pipe 16 and the stud bolts 9C and 22B2. As a result, mounting workability and assembling workability of the exhaust pipe 16 can be improved.

According to the first embodiment, since the length L2 of the second bellows pipe 20 arranged in the vertical direction is set longer than the length L1 of the first bellows pipe 18 arranged in the horizontal direction (L2 > L1), vibration absorbing performances can be improved while deformation by their own weights of the first bellows pipe 18 and the second bellows pipe 20 is suppressed.

That is, since in the second bellows pipe 20, its length direction which is a direction in which deformation is difficult to occur, that is, the axis line Z1-Z1 direction matches the vertical direction in which its own weight acts, deformation of itself caused by its own weight can be suppressed. Moreover, in the first bellows pipe 18 connected to the second bellows pipe 20, too, the downward bending deformation amount by its own weight can be kept small by the second bellows pipe 20.

Moreover, the length L2 of the second bellows pipe 20 is set longer than the length L1 of the first bellows pipe 18. Therefore, vibration absorbing performances in the front-rear direction and the left-right direction of the vehicle body by the second bellows pipe 20 can be improved. That is, regarding the engine 8 supported by the revolving frame 5 through the vibration isolating mount 8D, displacement of the vibration in the upper-lower direction is limited to some degree by the stopper provided on the vibration isolating mount 8D, and thus, vibration of the engine 8 in the front-rear direction and the left-right direction tends to become larger than the vibration in the upper-lower direction.

Then, by setting the length L2 of the second bellows pipe 20 arranged in the vertical direction longer, vibration absorbing performances in the front-rear direction and the left-right direction of the vehicle body is enhanced. As a result, vibration absorbing performances by each of the bellows pipes 18 and 20 can be improved while deformation of each of the bellows pipes 18 and 20 by their own weights is suppressed.

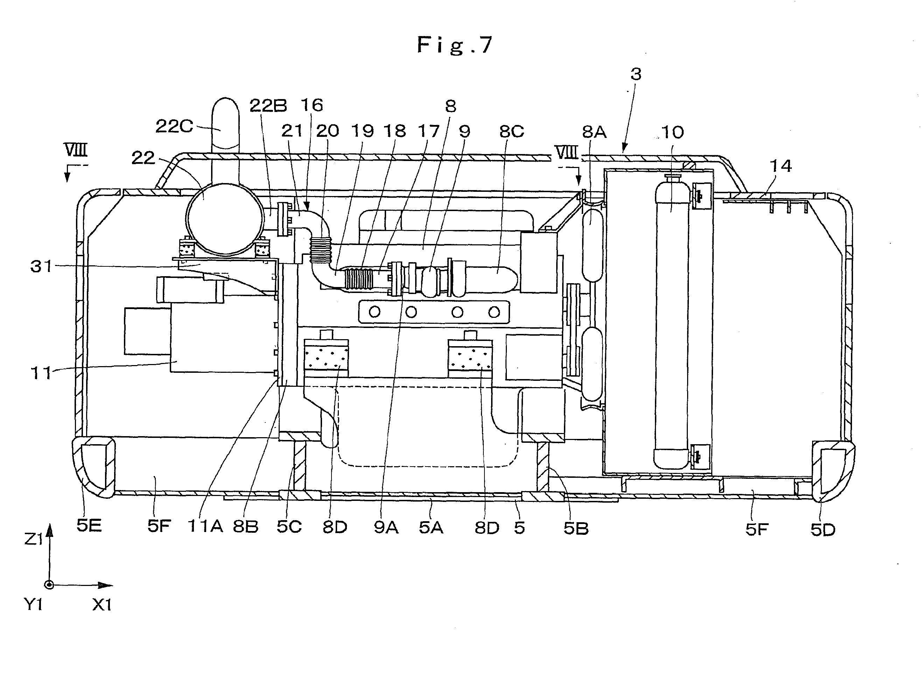

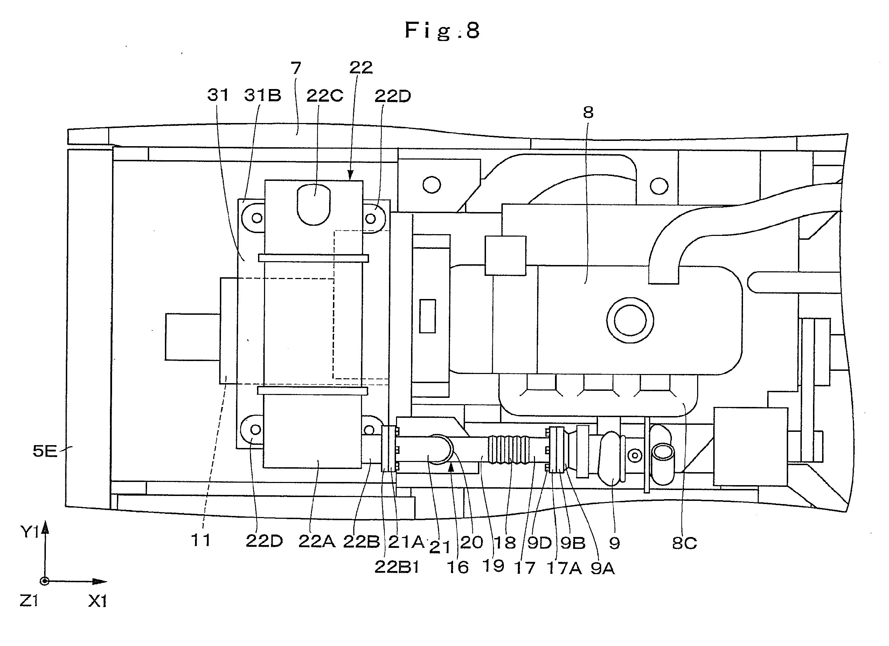

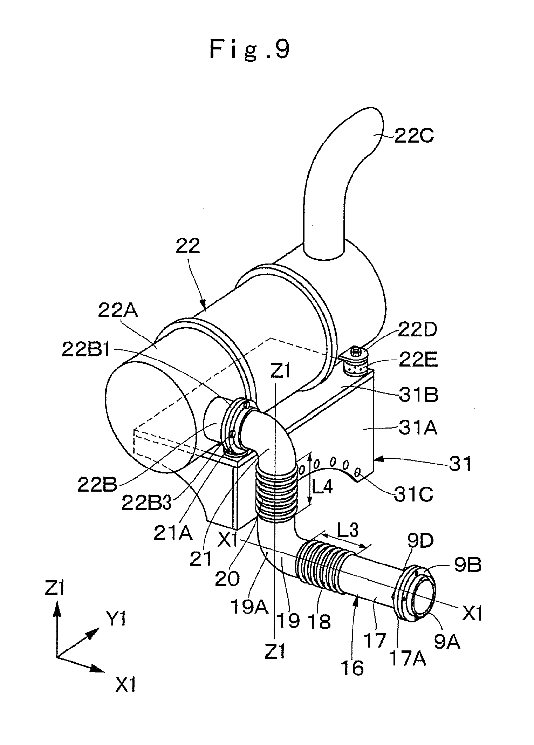

Next, Figs. 7 to 9 illustrate a second embodiment of the present invention. A characteristic of this embodiment is that the exhaust gas post-treatment device is configured to be supported by the engine through a support member. It should be noted that in the first embodiment, the component elements that are identical to those of the foregoing first embodiment will be simply denoted by the same reference numerals to avoid repetitions of similar explanations. Moreover, in the second embodiment, the partition member 15 used in the first embodiment is not shown.

In the figures, designated at 31 is a support member in a support deck shape located on the upper side of the hydraulic pump 11 and provided on the right side of the engine 8, and the support member 31 supports the exhaust gas post-treatment device 22 with respect to the engine 8. The support member 31 is composed of a mounting face portion 31A located on the base end side and substantially perpendicular and a supporting face portion 31B extending from the mounting face portion 31A toward the distal end side substantially horizontal.

In the mounting face portion 31A, a plurality of bolt through holes 31C are formed, and the support member 31 is fixed to a flange portion 11A of the hydraulic pump 11 by inserting a bolt (not shown) through the bolt through hole 31C. That is, the support member 31 is mounted on the pump mounting portion 8B of the engine 8 by bringing the mounting face portion 31A into contact with the flange portion 11A of the hydraulic pump 11 and by using the bolt together with the flange portion 11A in this state. On the other hand, at four corners of the supporting face portion 31B, a plurality of, four, for example, through holes (not shown) for mounting the vibration isolating member 22E are drilled.

In the hydraulic excavator 1 according to the second embodiment, the exhaust gas post-treatment device 22 is supported with respect to the engine 8 by using the above described support member 31, and its basic action is not particularly different from that in the above described first embodiment.

That is, according to the second embodiment, during running or working of the hydraulic excavator 1, the exhaust gas post-treatment device 22 mounted on the engine 8 through the support member 31 and the vibration isolating member 22E vibrates in a vibration mode different from that of the engine 8. In this case, vibration between the engine 8 and the exhaust gas post-treatment device 22 can be absorbed by bending deformation of the first bellows pipe 18 and the second bellows pipe 20 arranged in the midway portion of the exhaust pipe 16.

Thus, similarly to the above described first embodiment, vibration between the engine 8 and the exhaust gas post-treatment device 22 can be stably absorbed by bending deformation of the first bellows pipe 18 and the second bellows pipe 20, and reliability of the hydraulic excavator 1 can be improved. Moreover, vibration can be stably absorbed even if the lengths of each of the bellows pipes 18 and 20 are made smaller, and freedom in arrangement of the exhaust pipe 16 can be ensured.

It should be noted that in the case of the second embodiment, a length L3 of the first bellows pipe 18 arranged in the horizontal direction is illustrated at a length equal to or more than a length L4 of the second bellows pipe 20 arranged in the vertical direction (L3 ≥ L4). In this case, as in the first embodiment, the length L4 of the second bellows pipe 20 arranged in the vertical direction is preferably set longer than the length L3 of the first bellows pipe 18 arranged in the horizontal direction (L4 > L3).

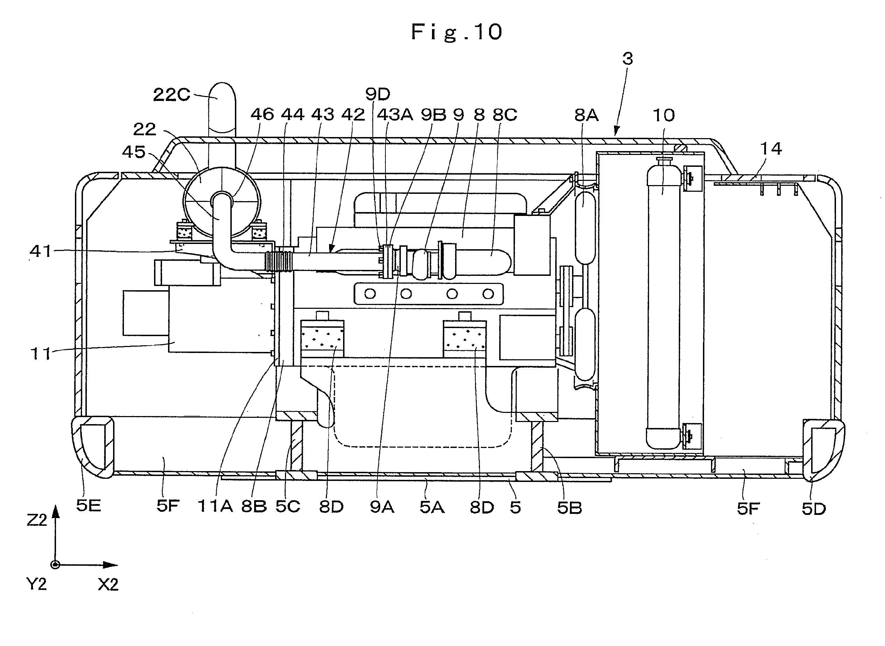

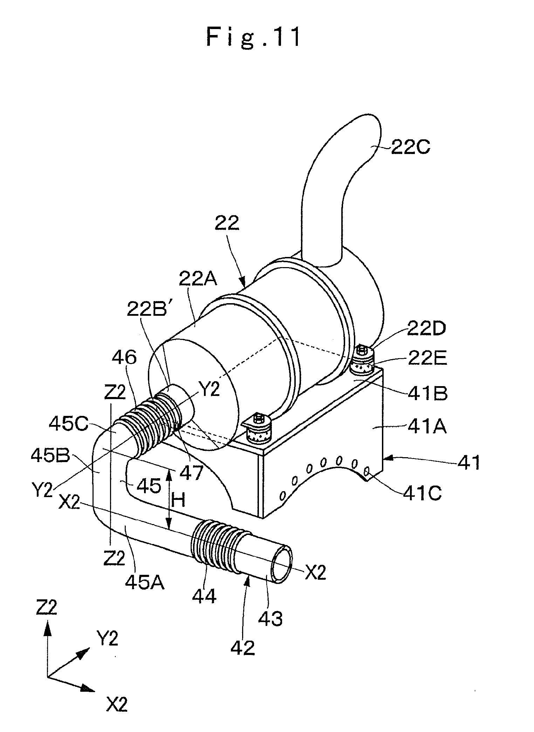

Next, Figs. 10 and 11 illustrate a third embodiment of the present invention. A characteristic of this embodiment is that, similarly to the above described second embodiment, the exhaust gas post-treatment device is configured to be supported by the engine through a support member, and the first bellows pipe and the second bellows pipe are configured to be arranged in the horizontal direction with a positional relationship in which they cross each other. It should be noted that in the third embodiment, the component elements that are identical to those of the foregoing first embodiment will be simply denoted by the same reference numerals to avoid repetitions of similar explanations.

In the figures, designated at 41 is a support member having a support deck shape for supporting the exhaust gas post-treatment device 22 with respect to the engine 8, and the support member 41 is, similarly to the support member 31 in the second embodiment, largely constituted by a mounting face portion 41A, a supporting face portion 41B, and a bolt through hole 41C. The support member 41 is mounted on the pump mounting portion 8B of the engine 8 together with the flange portion 11A of the hydraulic pump 11 by using a bolt.

Designated at 42 is an exhaust pipe connected to the exhaust port 9A of the super charger 9 constituting the engine 8, and the exhaust pipe 42 is constituted by an upstream side pipe 43, a first bellows pipe 44, a connecting pipe 45, a second bellows pipe 46, and a downstream side pipe 47 which will be described later.

The upstream side pipe 43 is connected to the exhaust port 9A of the super charger 9, and the upstream side pipe 43 is arranged so as to extend in the horizontal direction from the exhaust port 9A of the super charger 9 toward the right side of the vehicle body. On the upstream end side of the upstream side pipe 43, a mounting flange portion 43A is provided, and on the mounting flange portion 43A, bolt through holes (none of them is shown) are provided in correspondence with the stud bolts mounted on the mounting flange portion 9B of the super charger 9.

The first bellows pipe 44 located on the engine 8 side is provided by connecting to an outlet port of the upstream side pipe 43. This first bellows pipe 44 absorbs vibration between the super charger 9 of the engine 8 and the exhaust gas post-treatment device 22 together with the second bellows pipe 46 which will be described later.

The first bellows pipe 44 is formed as a metal cylindrical body having a bellows shape and is arranged so as to extend in the horizontal direction from the downstream end of the upstream side pipe 43 toward the right side of the vehicle body. That is, as illustrated in Fig. 11, the first bellows pipe 44 is arranged in the horizontal direction so that its axis line X2-X2 extends in the left-right direction of the vehicle body. The both ends of the first bellows pipe 44 are fixed to the upstream side pipe 43 and the connecting pipe 45 which will be described later by using welding means, for example. Thereby, the first bellows pipe 44 can absorb vibration in the upper-lower direction and the front-rear direction between the upstream side pipe 43 and the connecting pipe 45.

The connecting pipe 45 is provided between the first bellows pipe 44 and the second bellows pipe 46 which will be described later, and the connecting pipe 45 is to connect the first bellows pipe 44 and the second bellows pipe 46 to each other. The connecting pipe 45 has two bending portions 45A and 45C and is arranged so that its axis line Z2-Z2 matches the vertical direction. The connecting pipe is formed such that the upstream end side of the connecting pipe 45 is bent at 90 degrees in the L-shape so as to extend in the left-right direction of the vehicle body, and the downstream end side is bent at 90 degrees in the L-shape so as to extend in the front-rear direction of the vehicle body.

That is, the connecting pipe 45 connects the first bellows pipe 44 and the second bellows pipe 46 in series with a positional relationship in which the axis lines X2-X2 and Y2-Y2 cross each other. More specifically, the connecting pipe 45 has a first bending portion 45A extending in the left-right direction, a vertical portion 45B extending in the upper-lower direction, and a second bending portion 45C extending in the front-rear direction, and the vertical portion 45B has a length dimension (height dimension) H in the vertical direction. Therefore, the first bellows pipe 44 and the second bellows pipe 46 are arranged in the horizontal direction with a relationship in which the height positions in the upper-lower direction are different and the pipes cross each other at 90 degrees.

That is, as illustrated in Fig. 11, the connecting pipe 45 connects the first bellows pipe 44 and the second bellows pipe 46 in series with a relationship in which the axis line X2-X2 of the first bellows pipe 44 and the axis line Y2-Y2 of the second bellows pipe 46 cross each other (at a right angle) at 90 degrees on a plan view and spaced away only by the height dimension H in the upper-lower direction. Moreover, the both ends of the connecting pipe 45 are fixed to the first bellows pipe 44 and the second bellows pipe 46 by using welding means, for example.

The second bellows pipe 46 located on the exhaust gas post-treatment device 22 side is provided by connecting to the outlet port of the connecting pipe 45. This second bellows pipe 46 absorbs vibration between the super charger 9 of the engine 8 and the exhaust gas post-treatment device 22 together with the first bellows pipe 44.

The second bellows pipe 46 is formed as a metal cylindrical body having a bellows shape and arranged so as to extend in the horizontal direction from the downstream end of the connecting pipe 45 toward the rear side in the front-rear direction of the vehicle body. That is, as illustrated in Fig. 11, the second bellows pipe 46 is arranged in the horizontal direction so that the axis line Y2-Y2 thereof extends in the front-rear direction of the vehicle body. The both ends of the second bellows pipe 46 are fixed to the connecting pipe 45 and the downstream side pipe 47 which will be described later by using welding means, for example. Thereby, the second bellows pipe 46 can absorb vibration in the upper-lower direction and the left-right direction between the connecting pipe 45 and the downstream side pipe 47.

The downstream side pipe 47 is provided between the second bellows pipe 46 and an inlet side connecting portion 22B' of the exhaust gas post-treatment device 22, and the downstream side pipe 47 connects the second bellows pipe 46 and the inlet side connecting portion 22B' to each other. The downstream side pipe 47 is arranged so as to extend in the horizontal direction from the second bellows pipe 46 toward the rear side in the front-rear direction of the vehicle body.

The downstream end side of the downstream side pipe 47 is fixed to the inlet side connecting portion 22B' by using welding means, for example. It should be noted that a mounting structure between the downstream side pipe 47 and the inlet side connecting portion 22B' can be formed as a mounting structure using a stud bolt and a nut similarly to the mounting structure between the exhaust port 9A of the super charger 9 and the upstream side pipe 43.

The hydraulic excavator 1 according to the third embodiment supports the exhaust gas post-treatment device 22 with respect to the engine 8 by using the support member 41 as described above and connects the engine 8 and the exhaust gas post-treatment device 22 to each other by using the exhaust pipe 42 as described above, and its basic action is not particularly different from that in the above described first embodiment.

That is, according to the third embodiment, during running or working of the hydraulic excavator 1, the exhaust gas post-treatment device 22 mounted on the engine 8 through the support member 41 and the vibration isolating member 22E vibrates in a vibration mode different from that of the engine 8. In this case, the first bellows pipe 44 and the second bellows pipe 46 are provided through the connecting pipe 45 in the midway portion of the exhaust pipe 42 connecting the engine 8 and the exhaust gas post-treatment device 22 to each other. Each of these bellows pipes 44 and 46 is arranged with a positional relationship (more specifically, a positional relationship of crossing at a right angle) in which the axis line X2-X2 direction and the axis line Y2-Y2 direction cross each other.

As a result, vibration in the front-rear direction of the vehicle body generated between the engine 8 and the exhaust gas post-treatment device 22 can be absorbed by bending deformation of the first bellows pipe 44 in the front-rear direction (Y2-Y2 direction). Vibration in the left-right direction of the vehicle body generated between the engine 8 and the exhaust gas post-treatment device 22 can be absorbed by bending deformation of the second bellows pipe 46 in the left-right direction (X2-X2 direction). Vibration in the upper-lower direction of the vehicle body generated between the engine 8 and the exhaust gas post-treatment device 22 can be absorbed by bending deformation of the first bellows pipe 44 and the second bellows pipe 46 in the upper-lower direction (Z2-Z2 direction).

Therefore, the composite vibration in the three axial directions can be absorbed by bending deformation of the first bellows pipe 44 and the second bellows pipe 46. As a result, vibration between the engine 8 and the exhaust gas post-treatment device 22 can be stably absorbed by the first bellows pipe 44 and the second bellows pipe 46.

As described above, according to the third embodiment, the first bellows pipe 44 and the second bellows pipe 46 arranged in the midway portion of the exhaust pipe 42 are configured to be connected in series with a positional relationship in which the axis lines X2-X2 and Y2-Y2 thereof cross each other (at a right angle on a plan view) through the connecting pipe 45 having the two bending portions 45A and 45C spaced away by the dimension H in the height direction. Thereby, the direction in which each of the bellows pipes 44 and 46 is bent deformation can be matched with all the three axial directions of the vehicle body.

Thus, vibration between the engine 8 and the exhaust gas post-treatment device 22 whose vibration modes are different from each other can be stably absorbed. As a result, vibration absorbing performances of the exhaust pipe 42 can be improved, and reliability of the hydraulic excavator 1 can be improved.

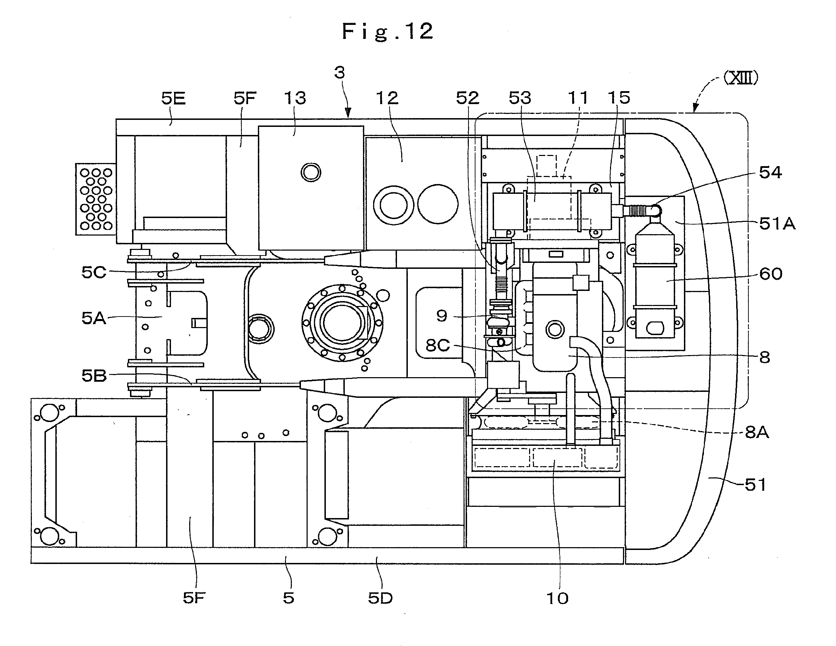

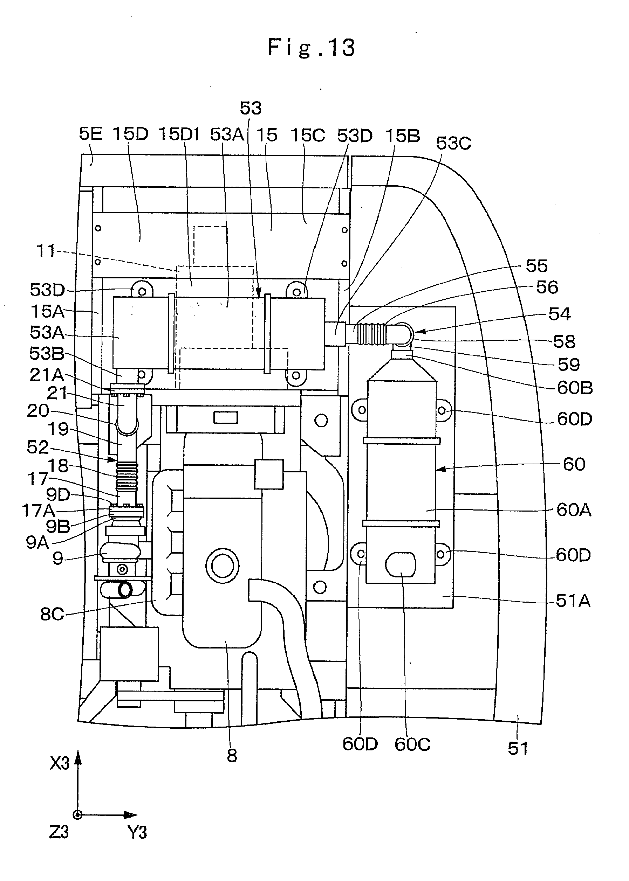

Next, Figs. 12 to 14 illustrate a fourth embodiment of the present invention. A characteristic of this embodiment is a configuration in which two exhaust gas post-treatment devices, that is, a first exhaust gas post-treatment device and a second exhaust gas post-treatment device are provided. It should be noted that in the fourth embodiment, the component elements that are identical to those of the foregoing first embodiment will be simply denoted by the same reference numerals to avoid repetitions of similar explanations.

In the figures, designated at 51 is a counterweight mounted on the rear end portion of the revolving frame 5, and the counterweight 51 holds weight balance with the working mechanism 4. In a portion in the counterweight 51 opposite to the engine 8, a rectangular recess-shaped mounting recessed portion 51A in which a NOx purifying device 60 which will be described later is mounted is provided.

Indicated at 52 is a first exhaust pipe connected to the exhaust port 9A of the super charger 9 constituting the engine 8. This first exhaust pipe 52 is configured to connect the first bellows pipe 18 and the second bellows pipe 20 arranged through the L-shaped connecting pipe 19 in series with a positional relationship in which the axis lines X1-X1 and Z1-Z1 thereof cross each other similarly to the exhaust pipe 16 in the above described first embodiment. It should be noted that since the first exhaust pipe 52 has the same configuration as that of the exhaust pipe 16 in the above described first embodiment, the further explanation on the configuration of the first exhaust pipe 52 will be omitted.

Indicated at 53 is a PM trapping device (particulate matter removing device) as the first exhaust gas post-treatment device provided on the outlet side of the first exhaust pipe 52, and the PM trapping device 53 is mounted on the treatment device mounting portion 15D1 of the partition member 15 through a vibration isolating member (not shown). The PM trapping device 53 is to trap and remove the particulate matters contained in the exhaust gas.

The PM trapping device 53 is composed of a cylindrical case 53A formed as a cylindrical vessel extending in the front-rear direction, an inlet side connecting portion 53B protruding to the engine 8 side from the front side (upstream side) of the cylindrical case 53A, an outlet side connecting portion 53C as an exhaust port protruding to the NOx purifying device 60 side which will be described later from the rear side (downstream side) of the cylindrical case 53A, a PM trapping filter (not shown) accommodated in the cylindrical case 53A, and four pieces of, for example, mounting brackets 53D provided by protruding in the left-right direction on the cylindrical case 53A.

The PM trapping filter accommodated in the cylindrical case 53A is to trap the particulate matters (PM) contained in the exhaust gas and to burn and remove the trapped particulate matters. The PM trapping device 53 is mounted on the treatment device mounting portion 15D1 in a vibration isolating state by mounting the vibration isolating member for the treatment device on each of the mounting brackets 53D and by mounting this vibration isolating member on the shielding cover 15D of the partition member 15.

Indicated at 54 is a second exhaust pipe connected to the outlet side connecting portion 53C of the PM trapping device 53. This second exhaust pipe 54 is for a flow of a high-temperature exhaust gas therein and is formed as a metal pipe. The second exhaust pipe 54 is composed of an upstream side pipe 55, a first bellows pipe 56, a connecting pipe 57, a second bellows pipe 58, and a downstream side pipe 59 which will be described later.

The upstream side pipe 55 is connected to the outlet side connecting portion 53C of the PM trapping device 53, and the upstream side pipe 55 is arranged so as to extend in the horizontal direction toward the rear side in the front-rear direction of the vehicle body from the outlet side connecting portion 53C of the PM trapping device 53. The upstream end side of the upstream side pipe 55 is fixed to the outlet side connecting portion 53C by using welding means, for example.

The first bellows pipe 56 located on the upstream side is provided by connecting to the outlet port of the upstream side pipe 55. This first bellows pipe 56 absorbs vibration between the PM trapping device 53 and the NOx purifying device 60 which will be described later together with the second bellows pipe 58 which will be described later.

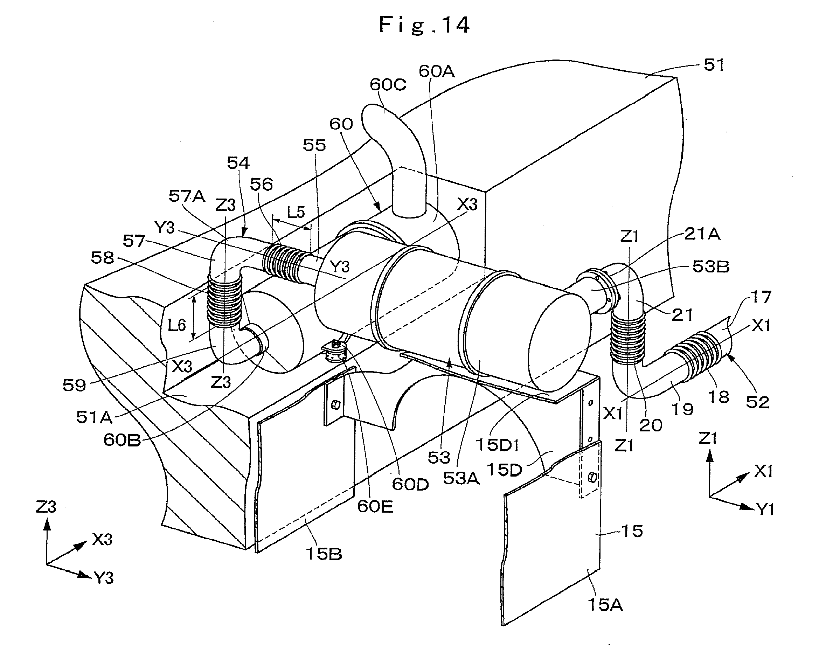

The first bellows pipe 56 is formed as a metal cylindrical body having a bellows shape and is arranged so as to extend in the horizontal direction from the downstream end of the upstream side pipe 55 toward the rear side in the front-rear direction of the vehicle body. That is, as illustrated in Fig. 14, the first bellows pipe 56 is arranged in the horizontal direction so that the axis line Y3-Y3 thereof extends in the front-rear direction of the vehicle body. The both ends of the first bellows pipe 56 are fixed to the upstream side pipe 55 and the connecting pipe 57 which will be described later by using welding means, for example. Therefore, the first bellows pipe 56 can absorb vibration in the upper-lower direction (Z3-Z3) and in the left-right direction (X3-X3) between the upstream side pipe 55 and the connecting pipe 57.

The connecting pipe 57 is provided between the first bellows pipe 56 and the second bellows pipe 58 which will be described later, and the connecting pipe 57 connects the first bellows pipe 56 and the second bellows pipe 58 in the upper-lower direction (at different height positions). The connecting pipe 57 is formed as a connecting pipe having a bending portion 57A bent at 90 degrees in a substantially L-shape and connects the first bellows pipe 56 and the second bellows pipe 58 in series with a positional relationship in which the axis lines Y3-Y3 and Z3-Z3 thereof cross each other and moreover, the second bellows pipe 58 is located on the lower side.

That is, as illustrated in Fig. 14, the connecting pipe 57 connects the first bellows pipe 56 extending in the axis line Y3-Y3 direction and the second bellows pipe 58 extending in the axis line Z3-Z3 direction in series so that they cross each other at 90 degrees (at a right angle). The both ends of the connecting pipe 57 are fixed to the first bellows pipe 56 and the second bellows pipe 58 by using welding means, for example.

The second bellows pipe 58 located on the downstream side is provided by connecting to the outlet port of the connecting pipe 57. This second bellows pipe 58 absorbs vibration between the PM trapping device 53 and the NOx purifying device 60 together with the first bellows pipe 56.

The second bellows pipe 58 is formed as a metal cylindrical body having a bellows shape and is arranged so as to extend from the downstream end of the connecting pipe 57 to the lower side in the vertical direction of the vehicle body. The both ends of the second bellows pipe 58 are fixed to the connecting pipe 57 and the downstream side pipe 59 which will be described later by using welding means, for example. Thereby, the second bellows pipe 58 can absorb vibration in the front-rear direction and in the left-right direction between the connecting pipe 57 and the downstream side pipe 59.

A length L6 of the second bellows pipe 58 arranged in the vertical direction is set equal to or more than a length L5 of the first bellows pipe 56 arranged in the horizontal direction (L6 ≥ L5). Preferably, the length L6 of the second bellows pipe 58 is set longer than the length L5 of the first bellows pipe 56 (L6 > L5).

The downstream side pipe 59 is provided between the second bellows pipe 58 and an inlet side connecting portion 60B of the NOx purifying device 60 which will be described later, and the downstream side pipe 59 connects the second bellows pipe 58 and the inlet side connecting portion 60B. The downstream side pipe 59 is formed as a connecting pipe in which the axis line X3-X3 and the axis line Z3-Z3 are bent at 90 degrees in a substantially L-shape, and its downstream end side is fixed to the inlet side connecting portion 60B by using welding means, for example.

Indicated at 60 is a NOx purifying device as a second exhaust gas post-treatment device provided on the outlet side of the second exhaust pipe 54, and the NOx purifying device 60 is mounted on the mounting recessed portion 51A of the counterweight 51 through a vibration isolating member 60E. The NOx purifying device 60 is to decompose nitrogen oxides (NOx) contained in the exhaust gas to nitrogen and water for purification.

The NOx purifying device 60 is composed of a cylindrical case 60A formed as a cylindrical vessel extending in the left-right direction, an inlet side connecting portion 60B protruding from the right side (upstream side) of the cylindrical case 60A toward the PM trapping device 53 side, a tail pipe 60C which becomes an exhaust port extending upward from the rear side (downstream side) of the cylindrical case 60A, a selective reduction catalyst and an oxidation catalyst (none of them is shown) accommodated in the cylindrical case 60A, and four pieces of, for example, mounting brackets 60D provided on the cylindrical case 60A by protruding in the left-right direction.

In the midway portion of the second exhaust pipe 54 on the upstream side of the cylindrical case 60A, a urea water injection valve (not shown) is provided. This urea water injection valve is to inject urea water solution stored in a urea water solution tank (not shown) toward the exhaust gas introduced into the cylindrical case 60A. The selective reduction catalyst selectively reduces and reacts nitrogen oxides contained in the exhaust gas introduced into the cylindrical case 60A by ammonia generated from the urea water solution and decomposes them into nitrogen and water.

The NOx purifying device 60 is mounted on the mounting recessed portion 51A in the vibration isolating state by mounting the vibration isolating member 60E for the treatment device on each of the mounting brackets 60D and by mounting this vibration isolating member 60E on the mounting recessed portion 51A of the counterweight 51.

According to the fourth embodiment, during running or working of the hydraulic excavator 1, the PM trapping device 53 mounted on the revolving frame 5 through the partition member 15 and the vibration isolating member vibrates in a vibration mode different from that of the engine 8. Moreover, the NOx purifying device 60 mounted on the mounting recessed portion 51A of the counterweight 51 through the vibration isolating member 60E vibrates in a vibration mode different from that of the PM trapping device 53.

In this case, vibration of the engine 8 and the PM trapping device 53 can be absorbed by bending deformation of the first bellows pipe 18 and the second bellows pipe 20 arranged in the midway portion of the first exhaust pipe 52. It should be noted that since a basic action by the first exhaust pipe 52 on which the first bellows pipe 18 and the second bellows pipe 20 are provided is the same as that of the exhaust pipe 16 in the above described first embodiment, the further explanation on the action of the first exhaust pipe 52 will be omitted.

On the other hand, vibration in the front-rear direction (Y3-Y3) of the vehicle body generated between the PM trapping device 53 and the NOx purifying device 60 can be absorbed by bending deformation of the second bellows pipe 58. The vibration in the left-right direction (X3-X3) of the vehicle body generated between the PM trapping device 53 and the NOx purifying device 60 can be absorbed by bending deformation of the first bellows pipe 56 and the second bellows pipe 58. The vibration in the upper-lower direction (Z3-Z3) of the vehicle body generated between the PM trapping device 53 and the NOx purifying device 60 can be absorbed by the first bellows pipe 56.

As described above, according to the fourth embodiment, the first bellows pipe 56 and the second bellows pipe 58 arranged in the midway portion of the second exhaust pipe 54 are configured to be connected in series with a positional relationship in which the axis lines Y3-Y3 and Z3-Z3 thereof cross each other (at a right angle on an elevation view). As a result, the direction in which each of the bellows pipes 56 and 58 is bent deformation can be matched with all the three axial directions of the vehicle body. Thus, vibration between the PM trapping device 53 and the NOx purifying device 60 whose vibration modes are different from each other can be stably absorbed.

Moreover, according to the fourth embodiment, the length L6 of the second bellows pipe 58 arranged in the vertical direction is set longer than the length L5 of the first bellows pipe 56 arranged in the horizontal direction. Thus, vibration absorbing performances can be improved while deformation by their own weights of the first bellows pipe 56 and the second bellows pipe 58 is suppressed.

It should be noted that in the above described first embodiment, the case in which the first bellows pipe 18 is configured to be arranged in the horizontal direction and the second bellows pipe 20 is arranged in the vertical direction is explained as an example. However, the present invention is not limited to the same, and a configuration may be adopted in that the first bellows pipe is arranged in the vertical direction and the second bellows pipe is arranged in the horizontal direction. On the other hand, a configuration may be adopted in that the first bellows pipe or the second bellows pipe is shifted from the vertical direction (inclined with respect to the vertical direction) in arrangement and the second bellows pipe and the first bellows pipe are shifted from the horizontal direction (inclined with respect to the horizontal direction) in the arrangement. That is, the first bellows pipe and the second bellows pipe can be configured to be arranged with a positional relationship in which their axis lines cross each other (or more preferably at a right angle on an elevation view).

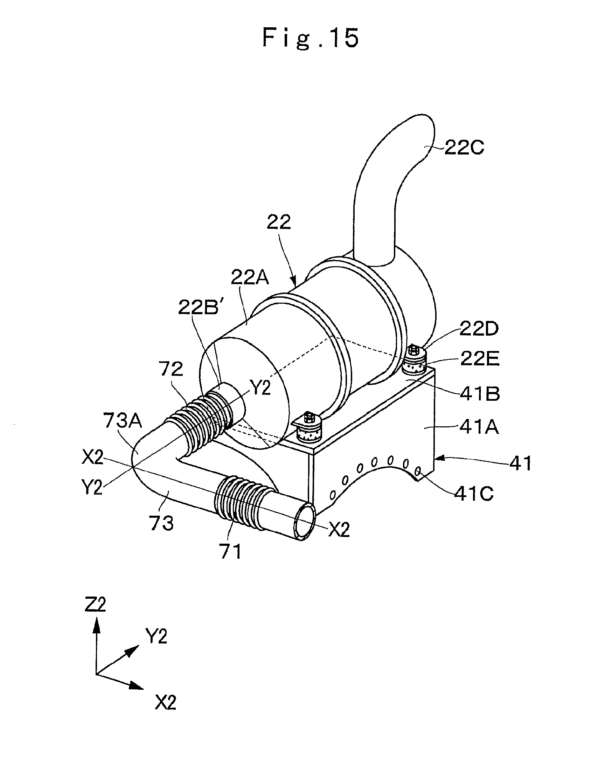

In the above described third embodiment, the case in which the first bellows pipe 44 and the second bellows pipe 46 are configured to be arranged in the horizontal direction at the different heights by using the connecting pipes 45 having the two bending portions 45A and 45C is explained as an example. However, the present invention is not limited to the same, and a configuration may be adopted in that, as in a first modification illustrated in Fig. 15, for example, a first bellows pipe 71 and a second bellows pipe 72 are arranged in the horizontal direction (on the same plane) at the same height through a connecting pipe 73. That is, a configuration may be adopted in that the connecting pipe 73 having an L-shaped bending portion 73A arranged in the horizontal direction is provided between the first bellows pipe 71 and the second bellows pipe 72. Moreover, for example, a configuration is not limited to the arrangement in which the first bellows pipe and the second bellows pipe are arranged in the horizontal direction on the horizontal surface but are arranged with inclination with respect to the horizontal direction. That is, the first bellows pipe and the second bellows pipe can be configured to be arranged with a positional relationship in which the axis lines thereof cross each other.

In the above described third embodiment, similarly to the second embodiment, the case in which the exhaust gas post-treatment device 22 is configured to be mounted on the engine 8 through the support member 41 is explained as an example. However, the present invention is not limited to the same, and a configuration may be adopted in that, as in the first embodiment, for example, the exhaust gas post-treatment device is mounted on the partition member provided on the revolving frame.

In the above described first embodiment, the case in which the exhaust gas post-treatment device 22 is configured to be mounted on the partition member 15 mounted on the revolving frame 5, and in the second and third embodiments, the cases in which the exhaust gas post-treatment device 22 is configured to be mounted on the support members 31 and 41 mounted on the engine 8 are described as examples. However, the present invention is not limited to the same and the exhaust gas post-treatment device can be also configured to be mounted on the counterweight provided on the revolving frame, for example.

That is, the exhaust pipe on which the first bellows pipe and the second bellows pipe are provided can be provided between the members whose vibration modes are different from each other. Thus, it is only necessary that the vibration modes of the exhaust gas post-treatment device and the engine are different, and the member on which the exhaust gas post-treatment device is mounted may be any one of the revolving frame, the engine, the counterweight and the like. Here, the case in which the vibration modes of the exhaust gas post-treatment device and the engine are different from each other includes such a case in which the exhaust gas post-treatment device and the engine are respectively mounted on members whose vibration modes are different from each other or a case in which the vibration modes are different from each other since they are supported through a vibration isolating member or the like.

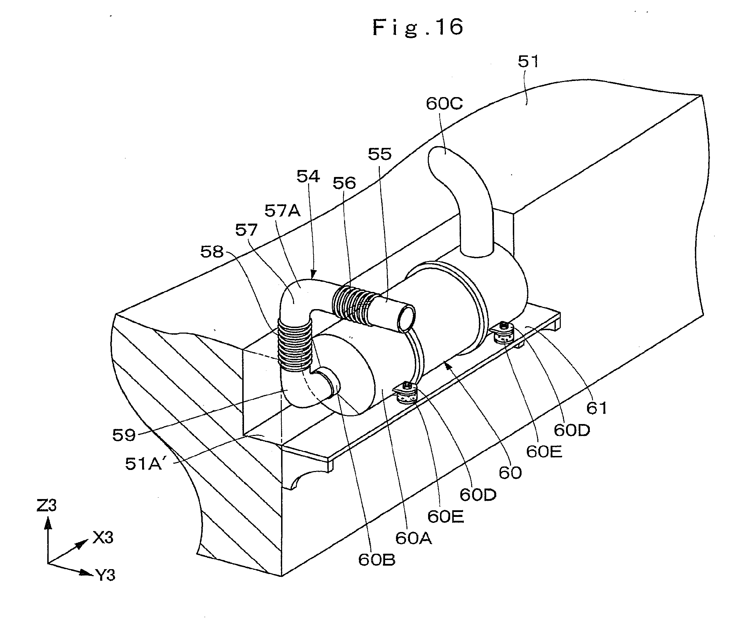

In the above described fourth embodiment, the case in which the NOx purifying device 60 is configured to be mounted on the mounting recessed portion 51A provided on the counterweight 51 is explained as an example. However, the present invention is not limited to the same, and a configuration may be adopted in that, as in the second modification illustrated in Fig. 16, a support deck 61 is provided on a portion corresponding to a mounting recessed portion 51A' in the counterweight 51, and the NOx purifying device 60 is mounted on the upper surfaces of these mounting recessed portion 51A' and the support deck 61, for example.

In the above described fourth embodiment, the case in which the NOx purifying device 60 is configured to be mounted on the mounting recessed portion 51A of the counterweight 51 is explained as an example. However, the present invention is not limited to the same, and a configuration may be adopted in that the NOx purifying device is mounted on the partition member provided on the revolving frame together with the PM trapping device, for example. Moreover, a configuration may be adopted in that the NOx purifying device is mounted on a support member provided on the engine together with the PM trapping device. Furthermore, a configuration may be adopted in that the NOx purifying device and the PM trapping device are mounted on the mounting recessed portion of the counterweight.

In the above described fourth embodiment, the case in which the PM trapping device 53 is configured to be mounted on the partition member 15 provided on the revolving frame 5. However, the present invention is not limited to the same, and a configuration may be adopted in that, as in the second embodiment, the PM trapping device is mounted on the engine through a support member, for example.

In the above described fourth embodiment, the case in which the first exhaust gas post-treatment device and the second exhaust gas post-treatment device are configured by the PM trapping device 53 and the NOx purifying device 60 is explained as an example. However, the present invention is not limited to the same, and they may be configured by another exhaust gas post-treatment device such as an oxidation catalyst device or the like. That is, the exhaust gas post-treatment device may be appropriately selected from various treatment devices (singularly or in combination) such as the oxidation catalyst device, the PM trapping device, the NOx purifying device, a muffler device and the like for use.

Moreover, in the above described embodiments, the hydraulic excavator 1 provided with the crawler-type lower traveling structure 2 as a construction machine is explained as an example. However, the present invention is not limited to the same, and the present invention may be applied to a hydraulic excavator provided with a wheel type lower traveling structure, for example. Other than that, the present invention can be widely applied to other construction machines such as a wheel loader, a dump truck, a lift truck and the like.

### DESCRIPTION OF REFERENCE NUMERALS

1: Hydraulic excavator (Construction machine)
2: Lower traveling structure (Vehicle body)
3: Upper revolving structure (Vehicle body)
8: Engine
9A: Exhaust port
16, 42: Exhaust pipe
18, 44, 56, 71: First bellows pipe
19, 45, 57, 73: Connecting pipe
19A, 45A, 45C, 57A: Bending portion
20, 46, 58, 72: Second bellows pipe
22: Exhaust gas post-treatment device
52: First exhaust pipe
53: PM trapping device (First exhaust gas post-treatment device)
53C: Outlet side connecting portion (Exhaust port)
54: Second exhaust pipe
60 : NOx purifying device (Second exhaust gas post-treatment device)

## Claims

1. A construction machine comprising:
an automotive vehicle body (2, 3);
an engine (8) mounted on said vehicle body (2,3) and having an exhaust port (9A);
an exhaust pipe (16, 42) connected to said exhaust port (9A) of said engine (8); and
an exhaust gas post-treatment device (22) provided on the outlet side of said exhaust pipe (16, 42),**characterized in that**:
said exhaust pipe (16, 42) has a first bellows pipe (18, 44) located on said engine (8) side and a second bellows pipe (20, 46) located on said exhaust gas post-treatment device (22) side; and
said first bellows pipe (18, 44, 71) and said second bellows pipe (20, 46, 72) are configured to be connected in series with a positional relationship in which axis lines thereof (X1-X1, Z1-Z1, X2-X2, Y2-Y2) cross each other.

2. The construction machine according to claim 1, wherein one bellows pipe (18) which is one of said first bellows pipe (18) and said second bellows pipe (20) is configured to be arranged in a horizontal direction, while the other bellows pipe (20) of said first bellows pipe (18) and sais second bellows pipe (20) is configured to be arranged in a vertical direction.

3. The construction machine according to claim 2, wherein a connecting pipe (19) having an L-shaped bending portion (19A) is provided between sais first bellows pipe (18) and said second bellows pipe (20).

4. The construction machine according to claim 2, wherein a length (L2, L4) of said other bellows pipe (20) arranged in the vertical direction is set equal to or more than a length (L1, L2) of said one bellows pipe (18) arranged in the horizontal direction.

5. The construction machine according to claim 1, wherein said first bellows pipe (44, 71) is arranged in the horizontal direction and said second bellows pipe (46, 72) is arranged in the horizontal direction with a positional relationship of crossing said first bellows pipe (44, 72) in configuration.

6. The construction machine according to claim 5, wherein a connecting pipe (45) having two L-shaped bending portions (45A, 45C) having different height positions in the upper-lower direction is provided between said first bellows pipe (44) and said second bellows pipe (46) in configuration.

7. The construction machine according to claim 5, wherein a connecting pipe (73) arranged in the horizontal direction and having an L-shaped bending portion (73A) is privided between said first bellows pipe (71) and said bellows pipe (72) in configuration.

8. A construction machine comprising:
an automotive vehicle body (2, 3);
an engine (8) mounted on said vehicle body (2,3) and having an exhaust port (9A);
a first exhaust pipe (52) connected to said exhaust port (9A) of said engine (8);
a first exhaust gas post-treatment device (53) provided on the outlet side of said first exhaust pipe (52);
a second exhaust pipe (54) connected to an exhaust port (53C) of said first exhaust gas post-treatment device (53) ; and
a second exhaust gas post-treatment device (60) provided on the outlet side of said second exhaust pipe (54), **characterized in that**:
at least one exhaust pipe in said first exhaust pipe (52) and said second exhaust pipe (54) has a first bellows pipe (18, 56) located on the upstream side with respect to a flow direction of an exhaust gas and a second bellows pipe (20, 58) located on the downstream side of said first bellows pipe (18, 56); and
said first bellows pipe (18, 56) and said second bellows pipe (20, 58) are configured to be connected in series with a positional relationship in which axis lines thereof (X1-X1, Z1-Z1, Y3-Y3, Z3-Z3) cross each other.

## Amended claims

### Amended claims under Art. 19.1 PCT

**1.** (Amended) A construction machine comprising:
an automotive vehicle body (2, 3);
an engine (8) mounted on said vehicle body (2,3) and having an exhaust port (9A);
an exhaust pipe (16) connected to said exhaust port (9A) of said engine (8); and
an exhaust gas post-treatment device (22) provided on the outlet side of said exhaust pipe (16),wherein
said exhaust pipe (16) has a first bellows pipe (18) located on said engine (8) side and a second bellows pipe (20) located on said exhaust gas post-treatment device (22) side; and
said first bellows pipe(18) and said second bellows pipe (20) are configured to be connected in series with a positional relationship in which axis lines thereof (X1-X1, Z1-Z1) cross each other, **characterized in that**:
one bellows pipe (18) which is one of said first bellows pipe (18) and said second bellows pipe (20) is configured to be arranged in a horizontal direction, while the other bellows pipe (20) of said first bellows pipe (18) and said second bellows pipe (20) is configured to be arranged in a vertical direction; and
a length (L2, L4) of said other bellows pipe (20) arranged in the vertical direction is set longer than a length (L1, L3) of said one bellows pipe (18) arranged in the horizontal direction.

**2.** (Canceled)

**3.** (Canceled)

**4.** (Canceled)

**5.** (Amended) A construction machine comprising:
an automotive vehicle body (2, 3);
an engine (8) mounted on said vehicle body (2,3) and having an exhaust port (9A);
an exhaust pipe (42) connected to said exhaust port (9A) of said engine (8) ; and
an exhaust gas post-treatment device (22) provided on the outlet side of said exhaust pipe (42), wherein
said exhaust pipe (42) has a first bellows pipe (44) located on said engine (8) side and a second bellows pipe (46) located on said exhaust gas post-treatment device (22) side; and
said first bellows pipe (44) and said second bellows pipe (46) are configured to be connected in series with a positional relationship in which axis lines thereof (X2-X2, Y2-Y2) cross each other, **characterized in that**:
said first bellows pipe(44) is arranged in the horizontal direction and said second bellows pipe (46) is arranged in the horizontal direction with a positional relationship of crossing said first bellows pipe (44); and
a connecting pipe (45) having two L-shaped bending portions (45A, 45C) having different height positions in a height dimension (H) in the upper-lower direction is provided between said first bellows pipe (44) and said second bellows pipe (46) in configuration.

**6.** (Canceled)

**7.** (Canceled)

**8.** (Amended) A construction machine comprising:
an automotive vehicle body (2, 3);
an engine (8) mounted on said vehicle body (2,3) and having an exhaust port (9A);
a first exhaust pipe (52) connected to said exhaust port (9A) of said engine (8);
a first exhaust gas post-treatment device (53) provided on the outlet side of said first exhaust pipe (52);
a second exhaust pipe (54) connected to an exhaust port (53C) of said first exhaust gas post-treatment device (53) ; and
a second exhaust gas post-treatment device (60) provided on the outlet side of said second exhaust pipe (54),wherein
at least one exhaust pipe in said first exhaust pipe (52) and said second exhaust pipe (54) has a first bellows pipe (18, 56) located on the upstream side with respect to a flow direction of an exhaust gas and a second bellows pipe (20, 58) located on the downstream side of said first bellows pipe (18, 56); and
said first bellows pipe (18, 56) and said second bellows pipe (20, 58) are configured to be connected in series with a positional relationship in which axis lines thereof (X1-X1, Y3-Y3) and (Z1-Z1, Z3-Z3) cross each other, **characterized in that**:
one bellows pipe (18, 56) which is one of said first bellows pipe (18, 56) and said second bellows pipe (20, 58) is configured to be arranged in a horizontal direction, while the other bellows pipe (20, 58) of said first bellows pipe (18, 56) and said second bellows pipe (20, 58) is configured to be arranged in a vertical direction; and
a length (L2, L6) of said other bellows pipe (20, 58) arranged in the vertical direction is set longer than a length (L1, L5) of said one bellows pipe (18, 56) arranged in the horizontal direction.

Statement under Art. 19.1 PCT
New Claim 1 combines original Claims 1, 2, and 4 and clarifies, on the basis of the description in the paragraph [0070] of the specification, the point that "the length of the bellows pipe in the vertical direction is longer than the length of the bellows pipe in the horizontal direction". New Claim 5 combines original Claims 1, 5, and 6 as an independent Claim and clarifies, on the basis of the description in the paragraph [0088] of the specification, the point that "the height dimension H and the height position is different". New Claim 8 clarifies, on the basis of the description in the paragraphs [0109], [0113], and [0124] of the specification, the point that "one of the bellows pipes is arranged in the horizontal, direction and the other bellows pipe is arranged in the vertical direction" and the point that "the length of the bellows pipe in the vertical direction is longer than the length of the bellows pipe in the horizontal direction".

On the other hand, Document 1 (JP2007-331602 A) discloses a configuration in which a single flexible joint (71) is provided in a diagonal direction. Document 2 (JP46-92779 U) discloses a configuration in which a first flexible pipe (8) and a second flexible pipe (10) are arranged with shifts in the vertical direction and in the horizontal direction, respectively. Document 3 (JP50-72007 U) discloses a configuration which is found to be such that a length of each of the flexible pipe portions (16) arranged in the vertical direction is equal to a length of each of the flexible pipe portions (no reference numerals) arranged in the horizontal direction. Document 4 (JP10-311218 A) discloses a configuration in which the length of the first induction element (16) and the length of the second induction element (18) are made equal to each other. Document 5 (JP2008-156835 A) discloses a configuration in which a first exhaust pipe (17, 28) and a second exhaust pipe (21, 29) having a bellows shape are arranged on the same horizontal plane.

Documents 1 to 5 do not disclose the configuration in which "the length of the bellows pipe arranged in the vertical direction is made larger". Moreover, the configuration in which "the first bellows pipe and the second bellows pipe are arranged in the horizontal direction at different height positions" is not disclosed, either.
